Europäisches Patentamt

European Patent Office

Office européen des brevets

(11) Veröffentlichungsnummer: **0 261 533**
**A2**

## (12) EUROPÄISCHE PATENTANMELDUNG

(21) Anmeldenummer: 87113377.3

(51) Int. Cl.⁴: **B01F 11/04**

(22) Anmeldetag: 14.09.87

(30) Priorität: 26.09.86 DE 3632654

(43) Veröffentlichungstag der Anmeldung:
**30.03.88 Patentblatt 88/13**

(84) Benannte Vertragsstaaten:
**AT BE CH DE ES FR GB GR IT LI LU NL SE**

(71) Anmelder: **Kernforschungsanlage Jülich**
**Gesellschaft mit beschränkter Haftung**
**Postfach 1913**
**D-5170 Jülich 1(DE)**

(72) Erfinder: **Mohn, Friedrich Helmut, Dr.**
**Franziskusstrasse 4**
**D-5170 Jülich(DE)**
Erfinder: **Soeder, Carl-Johannes, Prof.**
**Diemelstrasse 5**
**D-4600 Dortmund 41(DE)**
Erfinder: **Wagener, Klaus, Prof.**
**Rua dos Oitis 44 Apto. 301**
**22.453 Rio de Janeiro(BR)**
Erfinder: **Hansen, Kurt**
**Maastrichter Strasse 19**
**D-5100 Aachen(DE)**
Erfinder: **Heineke, Ernst P., Dr.**
**Bert Brecht Strasse 1**
**D-5102 Würselen(DE)**

(54) **Vorrichtung zur Umwälzung einer Suspension von in Schwebe zu haltenden Partikeln.**

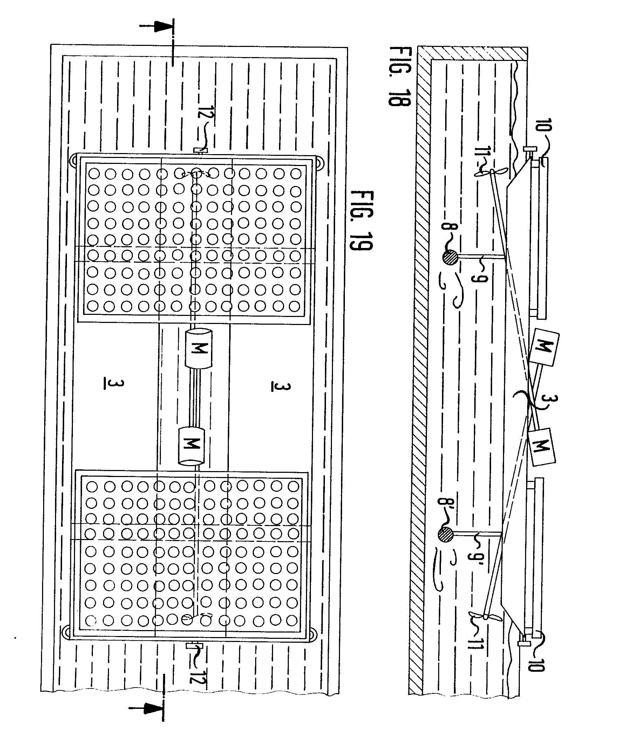

(57) Für die Umwälzung einer Suspension, insbesondere von Biomasse in einem Becken, dient zumindest ein in Beckenlängsrichtung bewegter, quer zum Becken verlaufender, allgemein stab-oder rohrförmiger Körper, der mit geringem Abstand über dem Boden in der unteren Hälfte des Beckens angeordnet ist und gegebenenfalls Vorsprünge an seiner Mantelfläche aufweist. Rund, ovale oder drei- oder mehreckige Querschnittsformen sind zweckmäßig, die gegebenenfalls Vorsprünge, insbesondere in Form von Plättchen oder Borsten, aufweisen. Der Turbulenz erzeugende allgemein rohrförmige Körper wird von einem Schwimmer getragen oder von einem über den Beckenboden laufenden Schlitten oder Wagen, der zweckmäßigerweise mittels eines gekapselten Motors mit Kabelverbindung nach außen angetrieben wird. Der Schwimmer wird über einen umlaufenden Seilzug bewegt oder vorzugsweise von einem am Schwimmer montierten Motor mit einem Antriebsorgan, wie einer Schiffsschraube, der insbesondere durch einen Elektromotor mit mitbewegter photovoltaischer Energiequelle gebildet wird (Figur 18).

FIG. 18

## Vorrichtung zur Umwälzung einer Suspension von in Schwebe zu haltenden Partikeln

Die Erfindung bezieht sich auf eine Vorrichtung zur Umwälzung einer Suspension von in Schwebe zu haltenden Partikeln, insbesondere von Biomasse, in einem Becken mit Hilfe eines in Beckenlängsrichtung bewegten, quer dazu im Becken angeordneten, in geringem Abstand über dem Boden endenden, Turbulenz erzeugenden Körpers.

Suspensionen mit wirksamen Schwebeteilchen muß man beständig in Bewegung halten bzw. umwälzen, um der Sedimentation entgegenzuwirken. Dies trifft insbesondere für Biomassesuspensionen, insbesondere algenhaltige Suspensionen zu, bei denen durch fortlaufende Umwälzung dafür gesorgt werden muß, daß die einzelnen Mikroorganismen ausreichend Licht für die Photosynthese erhalten.

Man kennt daher bereits Anordnungen wie einen Mischpropeller oder ein den Gesamtbehälterinhalt erfassendes Schaufelrad oder Anordnungen zur Erzeugung künstlicher Wellen oder auch ein sog. Mischbrett, das den Querschnitt eines Beckens im wesentlichen abschließt bis auf einen Schlitz von einigen cm oberhalb des Behälterbodens und über die Beckenlänge hin und her bewegt wird.

Ein Vergleich der bekannten Anordnungen miteinander zeigt, daß die Effektivität bezüglich der Photosynthese beim Schaufelrad am größten ist: die Effektivität eines mit 6 cm/s bewegten Mischbretts liegt im Vergleich zum Schaufelrad, das eine Strömung von 15 cm/s erzeugt, nur noch bei 3 % - allerdings bei einer aufzuwendenden mechanischen Leistung von nur gut 2 % im Vergleich zum Schaufelrad.

Aus diesem Vergleich ist ein Optimierungsbedarf ersichtlich bezüglich der systemerforderlichen Turbulenz bzw. photosynthetischen Effektivität und aufzuwendenden Leistung: Ziel der Erfindung ist daher eine Vorrichtung, mit der eine gegenüber dem Mischbrett verbesserte oder vergleichbare Effektivität bei möglichst verringerter aufzuwendender Leistung erreicht werden kann. Ein weiteres Ziel der Erfindung ist eine Vereinfachung der Montage des Turbulenz erzeugenden Körpers.

Die zu diesem Zweck entwickelte erfindungsgemäße Vorrichtung ist dadurch gekennzeichnet, daß als Körper zumindest ein in der unteren Hälfte des Beckens angeordneter, ggf. Vorsprünge an der Mantelfläche aufweisender, allgemein stab- oder rohrförmiger Körper vorgesehen ist, der von einem im Becken geführten zumindest teilweise in die Flüssigkeit tauchenden, in Längsrichtung bewegten Träger getragen wird.

Ein in der unteren Hälfte des Beckens angeordneter, insbesondere rohrförmiger Körper, der ggf. Vorsprünge, wie insbesondere Borsten, aufweist, hat im Vergleich zum Mischbrett, das den Gesamtquerschnitt des Beckens im wesentlichen abdeckt, einen weit geringeren Strömungswiderstand und damit einen erheblich geringeren Leistungsbedarf. Gleichzeitig ist jedoch die turbulenzerzeugende Wirkung, insbesondere im Hinblick auf eine Umwälzung vom Boden zur Beckenoberfläche hin keinesfalls vermindert, sondern im Gegenteil, je nach Profilwahl besonders attraktiv.

Durch die Montage an einem zumindest teilweise in die Flüssigkeit tauchenden (das Gewicht des Turbulenz erzeugenden Körpers aufnehmenden) Träger, wie einem Schwimmer oder einem über den Beckenboden laufenden Schlitten oder Wagen, entfallen die sonst üblichen Laufschienen und Gestänge über dem Becken.

Der auf Kufen oder Laufrädern über den Beckenboden bewegte Schlitten oder Wagen kann insbesondere mittels eines im Becken befindlichen gekapselten Motors angetrieben werden. Der den Turbulenz erzeugenden Körper über ein Gestänge tragende Schwimmkörper kann insbesondere mittels eines Seilzuges in Beckenlängsrichtung bewegt werden, oder vorzugsweise durch einen direkt am Schwimmer befestigten Motor mit zumindest einem Antriebsorgan, wie einer Schiffschraube oder dergleichen. Besonders gunstig ist der Antrieb eines solchen Schwimmer-Motors mit Hilfe von Solarzellen.

Bei der Verwendung eines Seilzuges ist ein umlaufender Seilzug zweckmäßig, der entweder über eine flexible Verbindung, wie z.B. eine Kette oder ein Seil, mit dem Schwimmer verbunden ist und bei einem Längsbecken über die Gesamtlänge etwa achsparallel über dem Becken verläuft und so für die Hin-und Herbewegung im Becken sorgt oder aber sich auf einer Ringbahn bewegt und einen oder insbesondere mehrere turbulenzerzeugende Körper längs der Ringbahn in Umlauf hält.

Weitere Besonderheiten der Erfindung gehen aus der nachfolgenden Beschreibung von Ausführungsarten anhand der beigefügten Zeichnungen hervor. Es zeigen (schematisch) im einzelnen:

Figur 1 ein Schema für ein Längsbecken mit turbulenzerzeugendem Körper;

Figure 2 - 7 unterschiedliche Querschnittsformen von turbulenzerzeugenden Körpern;

Figur 8 - 11 weitere Ausführungen von turbulenzerzeugenden Körpern in der Perspektive;

Figur 12 - 17 unterschiedliche Beckenformen und Körperanordnungen sowie unterschiedliche Bewegungsarten von Körpern, die insbesondere von Seilzügen in Beckenlängsrichtung bewegt werden; ·

Figur 18 eine Aufsicht auf ein Längsbecken, bei dem der Antrieb über Solarzellen und Elektromotoren mit Schiffschraube auf katamaranartigen Schwimmkörpern erfolgt, an denen (zumindest ein) turbulenzerzeugender Körper hängt und

Figur 19 ein Seitenansicht der Anordnung gemäß Fig. 18.

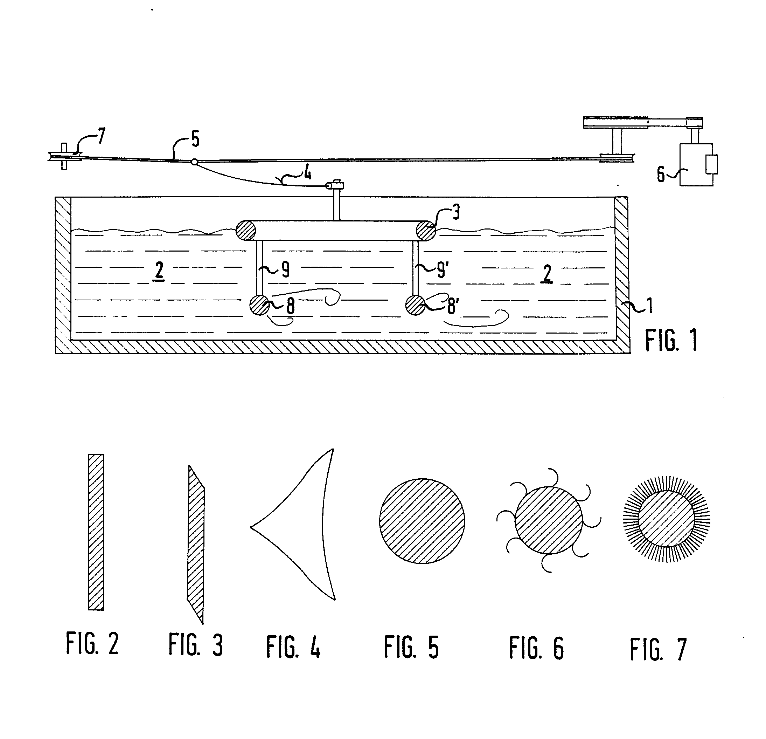

Gemäß Fig. 1 ist ein Längsbecken 1 mit Algensuspension 2 mit einem Schwimmkörper 3 versehen, der über ein bewegliches Element 4 an einem Seilzug 5 hängt, der von einem Motor 6 angetrieben wird und über eine Umlenkrolle 7 läuft. Turbulenzerzeugende stabförmige Körper 8, 8' sind am Schwimmer über Verbindungen 9, 9' befestigt und werden mit Hilfe des umlaufenden Seilzuges in Beckenlängsrichtung hin und her befördert.

Die turbulenzerzeugenden Körper 8,8' können Voll-oder Hohlprofile sein und unterschiedliche Gestalt aufweisen, wie durch die Figuren 2 - 7 angedeutet wird.

Selbstverständlich ist die in Fig. 2 - 7 gezeigte Querschnittsform der in der unteren Hälfte des Beckens befindlichen und in geringem Abstand über dem Beckenboden endenden, turbulenzerzeugenden Körper nicht auf die gezeigten Profile beschränkt. Der Querschnitt kann vielmehr beliebig von rechteckig über oval bis rund, drei-oder mehreckig oder in sonstiger strömungsgünstiger, wie z.B. tragflügelartiger Form sein, wobei Ansätze, insbesondere Radialansätze, zweckmäßig erscheinen, die durch Plättchen oder Borsten, wie in Fig. 6 u. 7 angedeutet, gebildet werden können, oder auch der Schrauben-oder einer anderen Strömungsleitform angenähert sein können, wie insb. einer Art Deltaflügel.

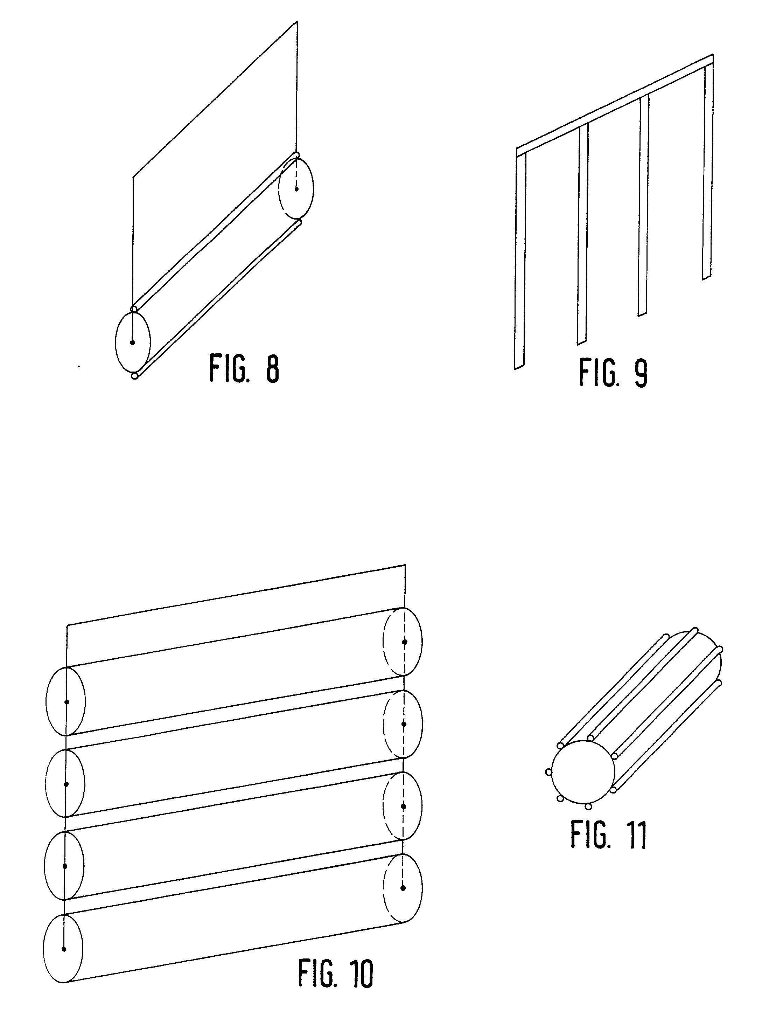

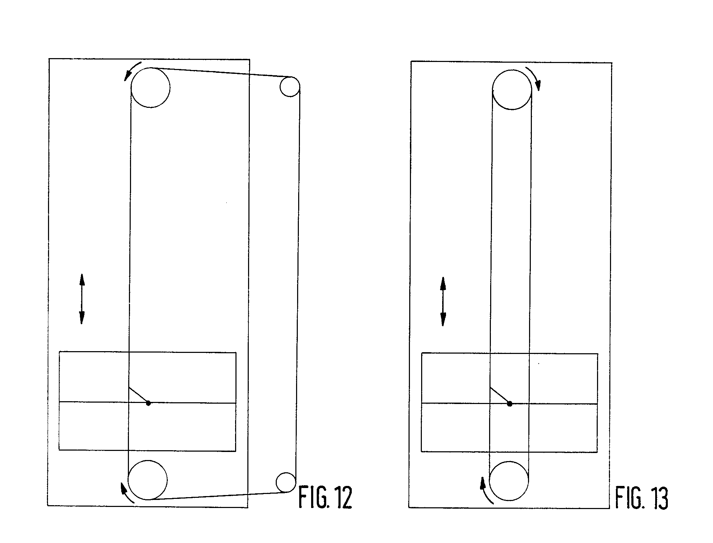

Fig. 8 - 11 zeigen turbulenzerzeugende Körper in der Perspektive im Schema, die durch einzelne Walzen oder Rohre mit einem oder mehreren Ansätzen gebildet werden können, wie aus Fig. 8 und 11 hervorgeht. Auch rechenartige Körper, wie in Fig. 9 gezeigt, sind brauchbar und, wie z.B. aus Fig. 10 hervorgeht, können mehrere, allgemein stab-oder rohrförmige Körper übereinander in der unteren Beckenhälfte angeordnet sein.

Die in Fig. 6 und 7 angedeuteten rohrförmigen Körper mit Radialansätzen können auch axial drehbar gelagert sein und über den Boden hinweg bewegt werden.

Die gezeigten Körper können auf Kufen oder Laufrädern gelagert sein und mit Hilfe eines gekapselten Motors durch das Becken bewegt werden.

Alternativ kann der Körper an einem auf der Oberfläche der Suspension ruhenden Schwimmer hängen über ein Gestänge, wie es in Fig. 1 angedeutet ist, und dieser Schwimmer wird dann mittels eines Seilzuges bewegt, der in seiner Laufrichtung umgepolt wird, wie in Fig. 12 ersichtlich ist oder aber, wie aus Fig. 13 hervorgeht, trotz beständigen Umlaufs für eine Richtungsumkehr sorgen kann, wenn der Schwimmer über eine entsprechend flexible Verbindung am Seilzug hängt, der über das Becken hinausragen kann.

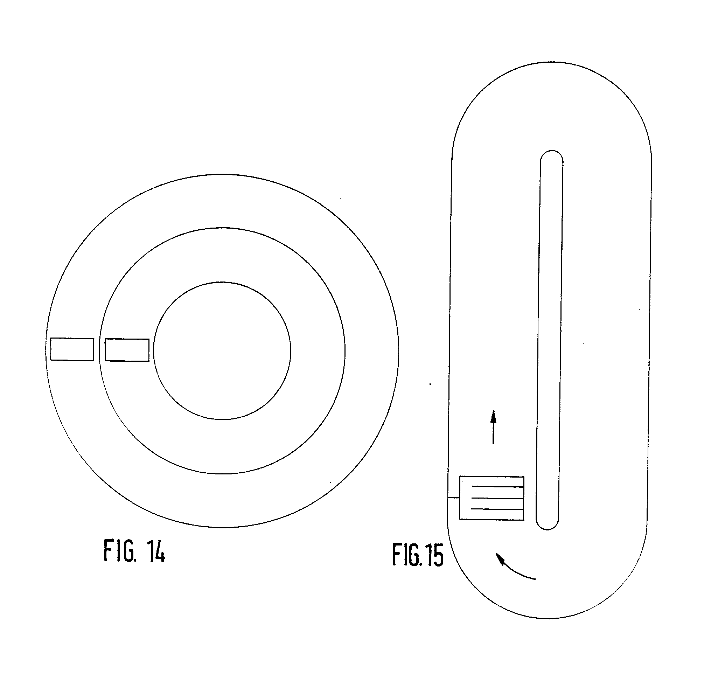

Fig. 14 zeigt ein ringförmiges Becken mit ein oder zwei parallel oder gegenläufig bewegten, turbulenzerzeugenden Körpern.

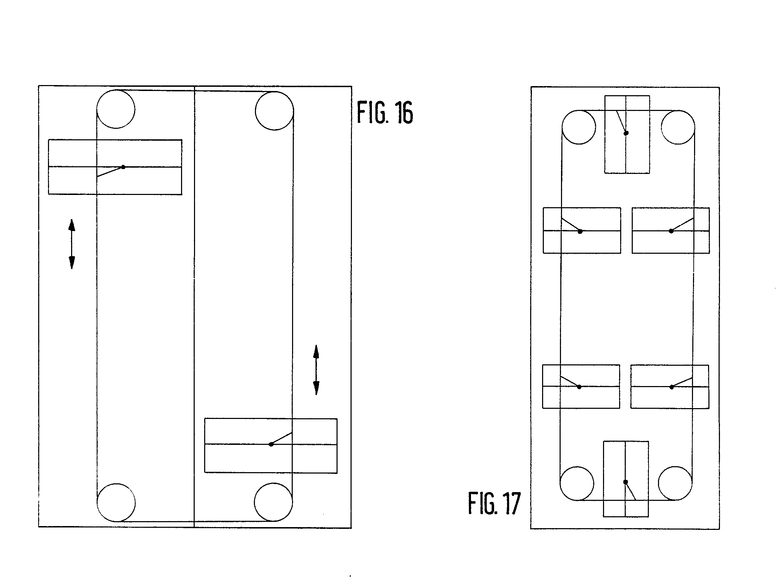

Bei zweigeteilten Becken kann auch, wie in Fig. 16 ersichtlich ist, eine gegenläufige Bewegung der turbulenzerzeugenden Körper in den beiden Beckenhälften vorgesehen sein.

Schließlich ist mechanisch und energetisch besonders günstig ein Umlauf von ein oder mehreren turbulenzerzeugenden Körpern auf Ringbahnen, wie er aus den Fig. 15 und 17 hervorgeht.

Eine besonders zweckmäßige Ausgestaltung des Antriebes ist in Fig. 18 und 19 angedeutet: Ein insbesondere katamaranförmiger Schwimmkörper 3 trägt Solarzellen-Panels 10 zur Energieversorgung der Motore M, mit deren Hilfe der Schwimmkörper über Antriebsschrauben 11 hin und her bewegt wird, wobei Umschalter 12 jeweils bei Kontakt mit der Beckenstirnwand für eine Aus- bzw. Einschaltung des einen bzw. anderen Motors sorgen.

Am Schwimmkörper 3 ist über ein Gestänge 9 ein turbulenzerzeugender Körper 8 montiert, der in geringem Abstand vom Beckenboden in Beckenlängsrichtung hin und her bewegt wird.

Bei einer solchen Anordnung kann der Energiebedarf völlig durch die Solarzellen (Panels 10) - ggf. mit Batterie-Zwischenspeicherung für lichtarme Zeit - gedeckt werden, die selbstverständlich auch seitlich überragend vorgesehen sein können, obgleich die durch die Solarzellen bedingte Abdeckung des Beckens in Anbetracht seiner Gesamtlänge nicht sonderlich ins Gewicht fällt.

## Ansprüche

1. Vorrichtung zur Umwälzung einer Suspension von in Schwebe zu haltenden Partikeln, insbesondere von Biomasse, in einem Becken mit Hilfe eines in Beckenlängsrichtung bewegten, quer dazu im Becken angeordneten, in geringem Abstand über dem Boden endenden, Turbulenz erzeugenden Körpers,

**dadurch gekennzeichnet,**

daß als Körper zumindest ein in der unteren Hälfte des Beckens (1) angeordneter, gegebenenfalls Vorsprünge an der Mantelfläche aufweisender, allgemein stab-oder rohrförmiger Körper (8) vorgesehen ist, der von einem im Becken (1) geführten zumindest teilweise in die Flüssigkeit (2) tauchenden, in Längsrichtung bewegten Träger (3) getragen wird.

2. Vorrichtung nach Anspruch 1,

**dadurch gekennzeichnet,**

daß der Körper (8) an einem auf der Oberfläche der Suspension ruhenden Schwimmer (3) oder an einem über den Behälterboden laufenden Schlitten oder Wagen gehaltert ist.

3. Vorrichtung nach Anspruch 2,

**dadurch gekennzeichnet,**

daß der Schwimmer (3) über eine Seilverbindung (4) an einem über die Beckenlänge reichenden, umlaufenden Förderzug (5) hängt.

4. Vorrichtung nach Anspruch 2,

**dadurch gekennzeichnet,**

daß am Schwimmer (3) ein Motor (M) befestigt ist, der zumindest ein Antriebsorgan (11) bewegt.

5. Vorrichtung nach Anspruch 4,

**gekennzeichnet durch**

eine photovoltaische Energiequelle (10) für den Motor (M).

6. Vorrichtung nach Anspruch 2,

**gekennzeichnet durch**

einen gekapselten Motor mit Kabelverbindung nach außen für den Antrieb eines Schlittens oder Wagens zur Bewegung des Turbulenz erzeugenden Körpers (8).

7. Vorrichtung nach einem der vorangehenden Ansprüche,

**gekennzeichnet durch**

eine runde, ovale oder drei-oder mehreckige Querschnittsgrundform des gegebenenfalls Vorsprünge an der Mantelfläche aufweisenden stab-oder rohrförmigen Körpers (8).

8. Vorrichtung nach Anspruch 7,

**dadurch gekennzeichnet,**

daß die Vorsprünge des Körpers an der Mantelfläche durch Radialvorsprünge, insbesondere durch Plättchen oder Borsten gebildet werden (Figur 6 - 8; 11).

9. Vorrichtung nach einem der vorangehenden Ansprüche,

**gekennzeichnet durch**

mehrere aufeinanderfolgende Turbulenz erzeugende Körper, die an einem oder mehreren Trägern (3) montiert sind.

10. Vorrichtung nach einem der vorangehenden Ansprüche,

**dadurch gekennzeichnet,**

daß der Turbulenz erzeugende Körper (8) mit Radialvorsprüngen versehen und drehbar gelagert ist.

11. Vorrichtung nach einem der Ansprüche 1 bis 6,

**dadurch gekennzeichnet,**

daß der Turbulenz erzeugende Körper (8) tragflügel-oder deltaflügelförmig gestaltet ist.

**FIG. 1**

**FIG. 2** **FIG. 3** **FIG. 4** **FIG. 5** **FIG. 6** **FIG. 7**

0 261 533

FIG. 8

FIG. 9

FIG. 10

FIG. 11

FIG. 12

FIG. 13

FIG. 14

FIG. 15

FIG. 16

FIG. 17

FIG. 18

FIG. 19